# EUROPEAN PATENT APPLICATION

(11) **EP 1 921 275 A2**
(43) Date of publication of application: **14.05.2008**
(21) Application number: 07254261.6
(22) Date of filing: 27.10.2007
(51) Int. Cl.: F01D 25/12, F02C 7/16, F02C 7/224

(54) **Cooling arrangement for aircraft electronics**

(30) Priority: 11.11.2006 GB 0622516
(71) Applicant: Rolls-Royce plc, 65 Buckingham Gate London SW1E 6AT (GB)
(72) Inventor: Coney, Michael Harvey, Littleover Derby, DE23 6DX (GB); Mullender, Andrew James, Beeston Nottingham, NG9 1FN (GB); Handley, Brian Alex, Alvaston Derby, DE24 0AA (GB); Parkin, David Michael, Melbourne, Derbyshire, DE73 8FL (GB)
(74) Representative: Gunn, Michael Alan

(57) **Abstract**

An aircraft electrical component cooling arrangement and operating method comprises at least one electrical component (40) housed in a body (38), for example an engine's electronic controller, characterised in that fuel is passed through the body (38) and directly over the component (40). Advantageously, this maintains a uniform temperature of the electronic components, protection against internal and external fire, ability to further miniaturise electrical components and/or combine units due to enhanced cooling effectiveness over convention air cooled systems.

## Description

The present invention relates to an arrangement for cooling electronic components, particularly but not exclusively, using fuel to cool an electronic control unit of a gas turbine engine.

Air-cooling of electronics is extensively used in industry. Indirect water cooling of electronics is also used for example in large computing environments and for processor cooling applications.

Air cooling is conventionally used in aero-gas turbine engines. This air cooling requires a controlled temperature environment to be effective and this has resulted in the use of an enclosure for the engine electronic control (EEC) on some of the Applicant's Trent^{®} series of engines. Provision of the enclosure induces both cost and weight penalties.

Therefore it is an object of the present invention to provide an electronic cooling arrangement that overcomes the above mentioned problems.

In accordance with the present invention an aircraft electrical component cooling arrangement comprises at least one electrical component housed in a body characterised in that fuel is passed through the body and directly over the component.

Preferably, the component and body are of an engine's electronic control unit.

Preferably, the body defines an inlet gallery and an outlet gallery for distribution of the fuel over the at least one electrical component.

Normally, the aircraft comprises a fuel supply pipe extending between a fuel tank and a combustor assembly, an inlet pipe connects from the fuel supply pipe to the body and the outlet pipe connects the body to the supply pipe.

Preferably, a Venturi flow meter is provided in the supply pipe, the Venturi flow meter comprising a throat to which the outlet pipe is connected.

Preferably, the arrangement comprises a pump and a fuel supply pipe extending from an aircraft fuel tank to the body.

Preferably, the arrangement comprises a controllable valve for metering the flow of fuel into the body and temperature gauge for measuring the temperature of the components, the valve being controlled to maintain a desired temperature of the components.

Preferably, the body is completely filled with fuel.

In another aspect of the present invention there is provided a method of operating an aircraft electrical component cooling arrangement comprising at least one electrical component housed in a body, the body connected to a fuel supply pipe, method is characterised by passing fuel through the body directly over the component to cool the component.

The present invention will be more fully described by way of example with reference to the accompanying drawings in which:
Figure 1 is a schematic section of part of a ducted fan gas turbine engine attached to an aircraft structure;
Figure 2 is a schematic layout of an electrical component cooling arrangement in accordance with the present invention;
Figure 3 is a section X-X through the electrical component cooling arrangement in accordance with the present invention.

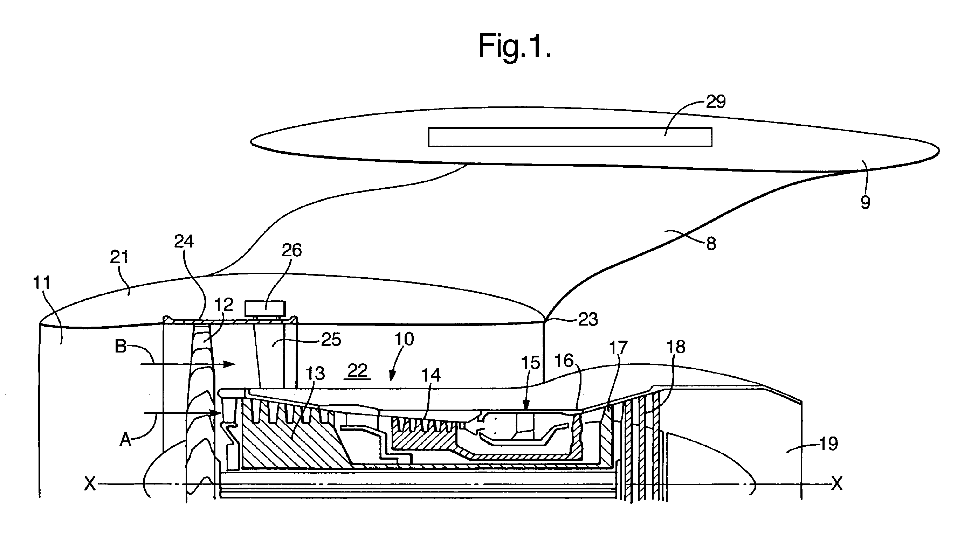

Referring to Figure 1, a ducted fan gas turbine engine generally indicated at 10 has a principal and rotational axis XX. The engine 10 is attached to the aircraft 9, usually to a wing or fuselage, via a pylon 8. Normally, a fuel tank 29 is housed in the wing 9.

The engine 10 comprises, in axial flow series, an air intake 11, a propulsive fan 12, an intermediate pressure compressor 13, a high-pressure compressor 14, combustion equipment 15, a high-pressure turbine 16, and intermediate pressure turbine 17, a low-pressure turbine 18 and a core exhaust nozzle 19. A nacelle 21 generally surrounds the engine 10 and defines the intake 11, a bypass duct 22 and a fan bypass exhaust nozzle 23.

The gas turbine engine 10 works in the conventional manner so that air entering the intake 11 is accelerated by the fan 12 to produce two air flows: a first airflow A into the intermediate pressure compressor 13 and a second airflow B which passes through a bypass duct 22 to provide propulsive thrust. The intermediate pressure compressor 13 compresses the airflow A directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high, intermediate and low-pressure turbines 16, 17, 18 respectively drive the high and intermediate pressure compressors 14, 13 and the fan 12 by suitable interconnecting shafts.

The fan 12 is circumferentially surrounded by a structural member in the form of a fan casing 24, which is supported by an annular array of outlet guide vanes 25. Engine accessories such as the EEC 26 and oil tank are mounted on the fan casing 24.

The EEC 26 generates a substantial amount of heat and therefore requires cooling to prevent component failure. As mentioned in the pre-amble most engine electronics are air cooled and duct ambient air for this purpose.

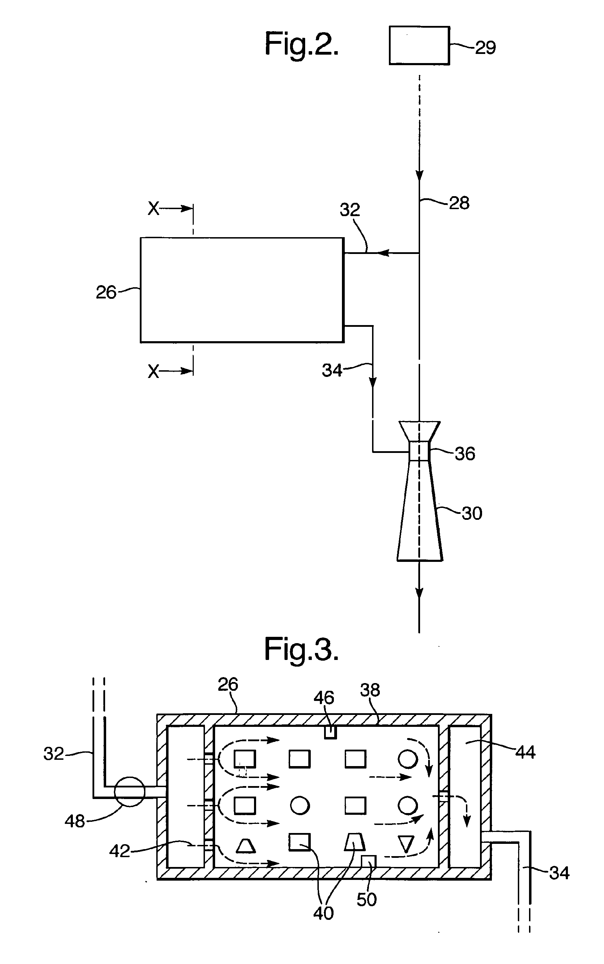

Referring now to Figures 2 and 3, the present invention relates to using fuel to cool the EEC unit containing electronics. The cooling arrangement comprises the EEC 26 and a fuel supply pipe 28 and a pump 30; cooling pipes 32 connect the supply pipe 28 to an inlet pipe 32 and an outlet pipe 34 of the EEC 26. In this exemplary embodiment, the pump is a Venturi flow meter through which the fuel flowing along the supply pipe 28 passes. The outlet pipe 34 is connected at a throat 36 of the Venturi 30 and with the inlet pipe 32 connected to the supply pipe 28 upstream of the Venturi 30, a flow of fuel passes through the EEC 26.

The EEC 26 comprises a body 38 enclosing an array of electronic components 40, such as capacitors, diodes, circuitry and microprocessors, and defines an inlet gallery 42 and an outlet gallery 44 to which the inlet and outlet pipes 32, 34 are connected respectively.

The electrical component cooling arrangement also comprises a controllable valve 48 for metering the flow of fuel into the body 38 and temperature gauge 50 for measuring the temperature of the components 40, the valve 48 being controlled to maintain a desired temperature of the components 40. The temperature gauge 50 is attached to the body, but may be attached to an electrical component. A number temperature gauges may be attached to a number of components. Where the temperature of a component varies from its desired operation temperature more or less fuel may be supplied to the EEC.

When cooling of the EEC 26 is required fuel will flow into the EEC 26 and directly over the components 40. The chamber defined by the body 38 is completely filled with fuel. The fuel supply pipe 28 is connected to an aircraft fuel tank and routed to injectors in the combustor assembly 15. Alternatively, the fuel supply pipe 28 is an additional connection to the aircraft fuel tank and the fuel from the outlet 34 is passed back to the tank. In this case the Venturi 30 is replaced by a convention pump 30.

During a typical flight cycle, the temperature of the fuel used (Kerosene) operates at a generally even temperature and this permits a stable operating environment to be established for the electronics. This use of fuel for controlling the environmental temperature is direct. Direct cooling involves flooding all or part of the unit and electronic components with the Kerosene. As Kerosene and other fuels are dielectric there is no danger of the electrical components causing a fire hazard.

Due to the large thermal capacity of fuel (and other fluids compared to a gas), total immersion of the electronics provides the additional benefit of complete protection against fire attack external to the EEC 26.

Thus the advantages of the present invention are maintenance of a uniform temperature of the electronic components, protection against internal and external fire, ability to further miniaturise electrical components and/or combine units due to enhanced cooling effectiveness.

It should be appreciated by the skilled person that additional cooling of the electronic components or body 38 may be achieved by the use of ribs, fins, turbulators, pedestals (e.g. 46) and rotating fluid flow fields as known in the art.

In the context of the present invention the word fuel is restricted to any dielectric petrochemical liquid.

## Claims

1. An aircraft electrical component cooling arrangement comprises at least one electrical component (40) housed in a body (38) **characterised in that** fuel is passed through the body (38) and directly over the component (40).

2. An aircraft electrical component cooling arrangement as claimed in claim 1 wherein the component (40) and body (38) are of an engine's (10) electronic control unit (26).

3. An aircraft electrical component cooling arrangement as claimed in any one of claims 1-2 wherein the body (38) defines an inlet gallery (42) and an outlet gallery (44) for distribution of the fuel over the at least one electrical component (40).

4. An aircraft electrical component cooling arrangement as claimed in any one of claims 1-3 wherein the aircraft comprises a fuel supply pipe (28) extending between a fuel tank (29) and a combustor assembly (15), an inlet pipe (32) connects from the fuel supply pipe (28) to the body (38) and the outlet pipe (34) connects the body (38) to the supply pipe (28).

5. An aircraft electrical component cooling arrangement as claimed in claim 4 wherein a Venturi flow meter (30) is provided in the supply pipe (28), the Venturi flow meter comprising a throat (36) to which the outlet pipe (34) is connected.

6. An aircraft electrical component cooling arrangement as claimed in any one of claims 1-3 wherein the arrangement comprises a pump (30) and a fuel supply pipe (28) extending from an aircraft fuel tank (29) to the body (38).

7. An aircraft electrical component cooling arrangement as claimed in any one of claims 1-3 wherein the arrangement comprises a controllable valve (48) for metering the flow of fuel into the body (38) and temperature gauge (50) for measuring the temperature of the components (40), the valve (48) being controlled to maintain a desired temperature of the components (40).

8. An aircraft electrical component cooling arrangement as claimed in any one of claims 1-7 wherein the body (38) is completely filled with fuel.

9. A method of operating an aircraft electrical component cooling arrangement comprising at least one electrical component (40) housed in a body (38), the body (38) connected to a fuel supply pipe (28), method is **characterised by** passing fuel through the body (38) directly over the component (40) to cool the component (40).
